# EUROPÄISCHE PATENTSCHRIFT

(11) **EP 0 821 658 B1**
(45) Veröffentlichungstag und Bekanntmachung des Hinweises auf die Patenterteilung: **07.01.1999**
(21) Anmeldenummer: 96908914.3
(22) Anmeldetag: 17.04.1996
(51) Int. Cl.: C02F 3/04, C02F 3/12

(54) **KLÄRANLAGE**
WASTE WATER TREATMENT PLANT
STATION D'EPURATION

(30) Priorität: 20.04.1995 AT 221/95 U
(43) Veröffentlichungstag der Anmeldung: 04.02.1998
(73) Patentinhaber: Schlatte, Anton, 9470 St. Paul (AT)
(72) Erfinder: Schlatte, Anton, 9470 St. Paul (AT)
(74) Vertreter: Kliment, Peter
(86) Internationale Anmeldenummer: AT9600074
(87) Internationale Veröffentlichungsnummer: WO9633136

(56) Entgegenhaltungen:
- EP-A- 0 192 631
- AT-B- 391 125
- DE-A- 2 045 377
- DE-A- 3 805 615
- DE-A- 4 207 084
- FR-A- 2 518 523
- US-A- 3 933 641

## Beschreibung

Die Erfindung bezieht sich auf eine Kläranlage gemäß dem Oberbegriff des Anspruches 1.

Bei der Entsorgung des Abwassers, insbesondere von dezentral gelagenenen Ein- oder Zweifamilienhäusern oder Kleinstsiedlungen mit meist weniger als zehn Einfamilienhäusern ergibt sich meist das Problem, daß ein Anschluß an eine zentrale Abwasser-Kläranlage nur mit sehr langen Kanalleitungen und einem dement-sprechend hohen Aufwand möglich ist. Andererseits stellen die häufig verwendeten Sickergruben, in denen unbehandeltes Abwasser versickern kann, eine erhebliche Umweltbelastung dar und werden daher in der Regel nicht mehr genehmigt.

Bei für solche dezentrale Kleinstsiedlungen bzw. Einfamilienhäuser häufig vorgesehenen dichten Senkgruben ergibt sich wieder das Problem, daß diese in entsprechenden Abständen entleert und der Inhalt trasportiert und behandelt werde muß, was mit einem erhebiichen Aufwand verbunden ist. Außerdem besteht auch die Gefahr, daß die Senkgrube undicht werden kann.

Durch die FR-A-2 518 523 wurde eine Kläranlage der eingangs erwähnten Art bekannt, bei der aus einem Kunststoffschwamm hergestellte Filter über einander auf wasserdurchlässigen Abstützungen angeordnet sind. Dabei sind die Abstützungen der Fiiter unter Einhaltung eines belüfteten Zwischenraumes übereinander gestapelt.

Bei dieser bekannten Lösung ergibt sich jedoch das Problem, daß zum Austauschen der Filter, die Abstützungen voneinander abgehoben, die Filter getauscht und danach wieder übereinander gestellt werden müssen. Dadurch ist es praktisch nur möglich alle Filter gemeinsam zu tauschen.

Weiters wurde durch die AT-B 391 125 eine Kläranlage bekannt, bei der Aufnahmen mit einem wasserdurchlässigen Boden und einem zumindest abschnittweise erhöhten Rand übereinander gestapelt sind. Diese Aufnahmen sind mit Kunststoffschnitzel und einer auf diesen aufgebrachten Kies- oder Sandschicht beschichtet, die gemeinsam ein Filter bilden.

Dabei ergibt sich ebenfalls das Problem, daß bei einem Austausch der Filter die Aufnahmen ebenfalls voneinander abgehoben und die je ein Filter bildenden Schichten abgetragen und erneuert werden müssen, wonach ein neues Filter auf jeder Aufnahme aufgebaut werden muß.

In beiden Fällen ist ein solcher Filtertausch mit einem sehr erheblichen Aufwand verbunden.

Ziel der Erfindung ist es, dies Nachteile zu vermeiden und eine Kläranlage der eingangs erwähnten Art vorzuschlagen, die sich durch einen einfachen Aufbau und Betrieb auszeichnet.

Erfindungsgemäß wird dies bei einer Kläranlage der eingangs erwähnten Art durch die kennzeichnenden Merkmale des Anspruches 1 erreicht.

Durch die vorgeschlagenen Maßnahmen ist es auf einfache Weise möglich die Filter auszutauschen. Dabei genügt es die Filter aufzuwickeln und zu entnehmen. Dabei ergibt sich auch der Vorteil, daß beim Aufwickeln eines Filters aus diesem Wasser herausgepreßt wird. Da die Filter aus Glas oder Gesteinswolle hergestellt sind, lassen sich diese auch sehr einfach handhaben. Beim Einsetzen neuer Filter, die vorzugsweise rechteckig ausgebildet sind, können diese einfach auf den Aufnahmen ausgebreitet werden. Außerdem bieten die vorgeschlagenen Filtermaterialien den für einen Abbau der Schadstoffe des Abwassers erforderlichen Mikroorganismen sehr gute Lebensbedingungen.

Durch die Merkmale des Anspruches 2 ergibt sich ein sehr einfacher Aufbau. Dabei ist es auch möglich, lediglich einzelnen Filter für sich auszutauschen. Außerdem erübrigt sich auch ein Ausbau der Aufnahmen für die Filter, wie dies bei den bekannten Lösungen erforderlich ist.

Durch die Merkmale des Anspruches 3 ergibt sich ein sehr kompakter Aufbau der Kläranlage.

Durch die im Anspruch 4 vorgeschlagenen Maßnahmen erhalten die Filter eine hohe mechanische Festigkeit und können ein relativ großes Luftvolumen aufnehmen.

Durch die Merkmale des Anspruches 5 wird ein sehr hohes Maß an Reinheit des in den Sickerschacht gelangenden Wassers sichergestallt.

Durch die Merkmale des Anspruches 6 läßt sich ein besonders hoher Reinigungsgrad für das zu behandelnde Abwasser erreichen.

Die Erfindung wird nun anhand der Zeichnung näher erläutert. Dabei zeigen:
Fig. 1 schematisch eine Kläranlage,
Fig. 2 schematisch einen Schnitt entlang der Linie II-II in der Fig. 1. durch die Vorklär- und Absetzeinrichtung,
Fig. 3 schematisch einen Längsschnitt durch die biologische Reinigungsstufe und
Fig. 4 einen Querschnitt durch die biologische Reinigungsstufe.

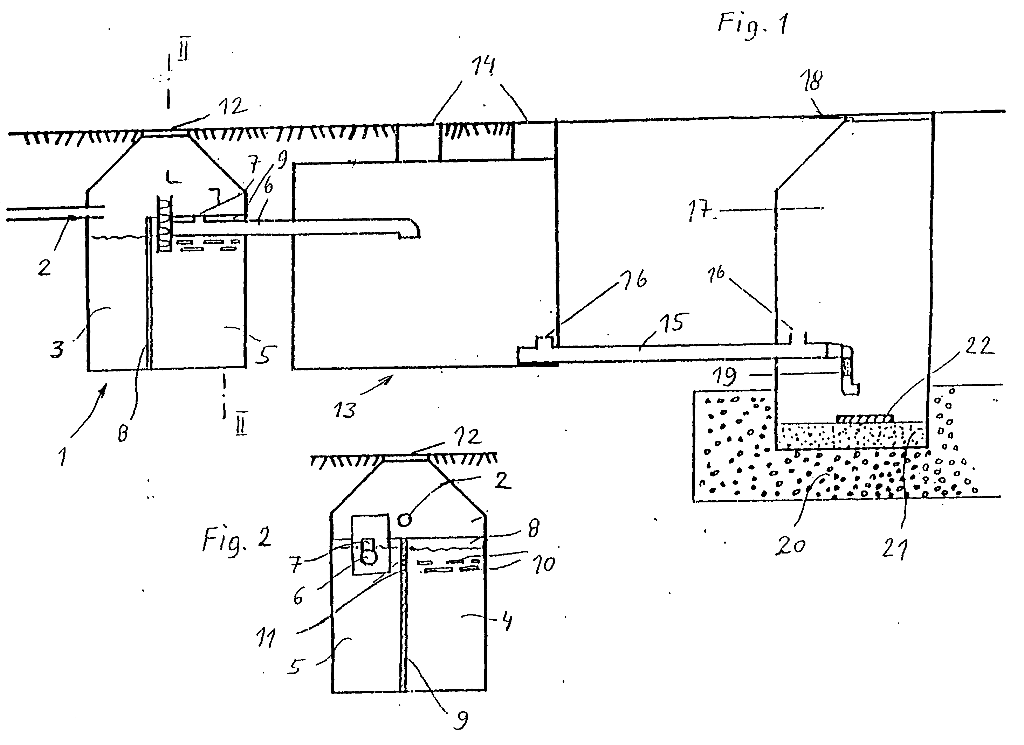

Die Kläranlage nach der Fig. 1 weist eine in das Erdreich versenkte Vorklär- und Absetzeinrichtung 1 auf, in die ein Zulauf 2 mündet. Die Vorklär- und Absetzeinrichtung 1 weist im wesentlichen drei Kammern 3, 4 und 5 auf, wobei aus der letzeren ein Ablaufrohr 6 wegführt, das mit einem Lüftungsstutzen 7 versehen ist.

Die Trennung der einzelnen Kammern 3, 4 und 5 voneinander erfolgt mittels der Wand 8, die sich im wesentlichen entlang einer Sehne der im wesentlichen zylindrischen Vorklär- und Absetzeinrichtung 1 erstreckt und der Wand 9, die im wesentlichen senkrecht zur Wand 8 verläuft. Im Bereich der Kammer 4 weist die Wand 8 in deren obersten Bereich Durchbrechungen 10 auf, über die von gröberen Feststoffen freies Abwasser 9 in die Kammer 4 überströmen kann. Gröbere Feststoffe werden in der Kammer 3 zurückgehalten und können dort ausfaulen und setzen sich letztlich als Schlamm ab.

In der Kammer 4 können sich feinere Feststoffe absetzen, sodaß ein im wesentlichen von Feststoffen befreites Abwasser über die im obersten Bereich der Wand 9 angeordneten Durchbrechungen 11 In die Kammer 5 überströmen kann.

Da die Vorklär- und Absetzeinrichtung 1 eine Entlüftung 12 aufweist, steht für den Faulprozeß ausreichend Luft- und damit Sauerstoff zur Verfügung. Dabei wird durch die Fallhöhe zwischen der Mündung des Zulaufs 2 und dem Wasserspiegel in den Kammern, der durch die Einlaßöffnung des Ablaufrohres 6 bestimmt ist, eine entsprechende Bewegung des Wasserspiegels bei jedem Zulauf von Abwasser sichergestellt, wodurch die Luftaufnahme des Abwassers verbessert wird.

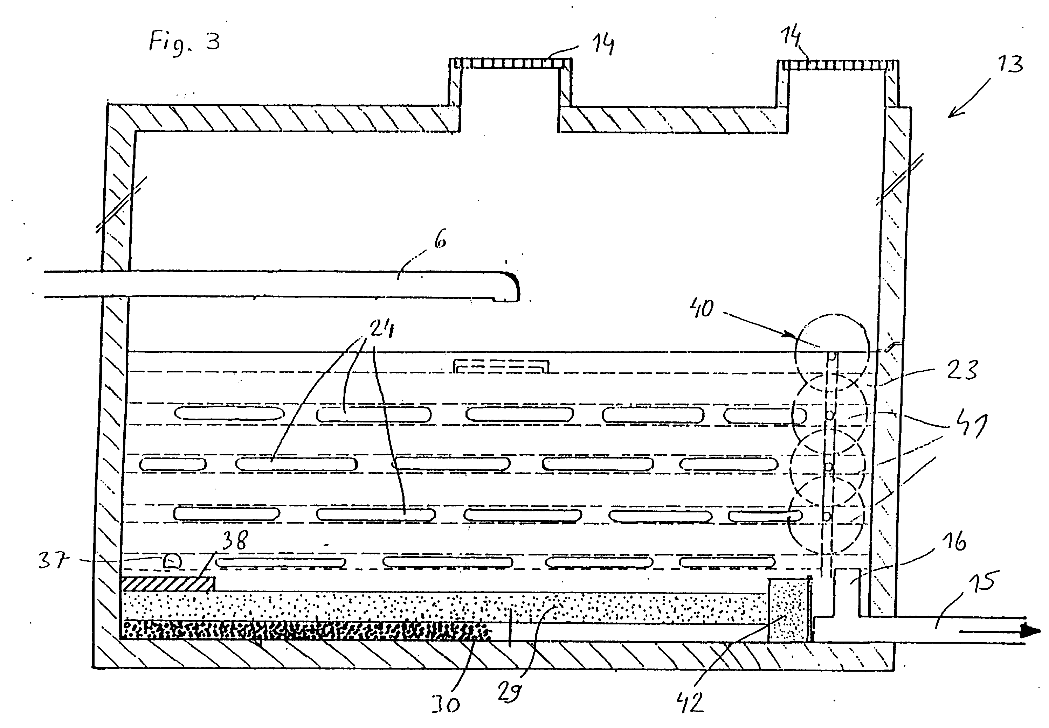

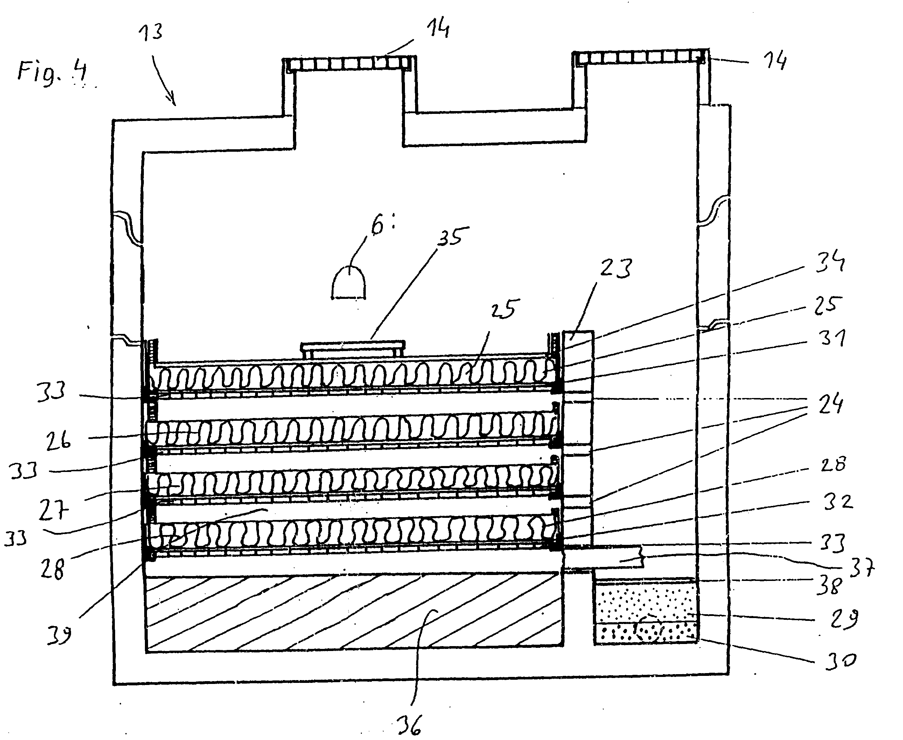

Das aus der Kammer 5 der Vorklär- und Absetzeinrichtung 1 ablaufende vorgeklärte und von Feststoffen befreite Abwasser gelangt in eine biologische Reingungsstufe 13, die anhand der Fig. 3 und 4 näher erläutert werden wird und die mit zwei Entlüftungen 14 versehen ist. Aus der biologischen Reinigungsstufe 13 gelangt das geklärte Wasser über eine Abzugsleitung 15, die mit Lüftungsstutzen 16 versehen ist, in einen Sickerschacht 17, der ebenfalls mit einer Entlüftung 18 versehen ist.

Dabei ist im Mündungsbereich der Abzugsleitung 15 ein Aktivkohlefilter 19 angeordnet.

Der Sickerschacht 17 steht auf einer ca. 40cm dicken Schicht 20 aus gewaschenem Sand mit einer Körnung im Bereich von 30 bis 100mm und weist ein Sandbett 21 mit einer Dicke von ca. 20cm und einer Körnung von 0 bis 4mm auf. Dabei ist das Sandbett 21 im unterhalb der Mündung der Abzugsleitung 15 liegenden Bereich durch eine aus Beton hergestellte Prallplatte 22 geschützt.

Wie aus der Fig. 3 zu ersehen ist, weist die biologische Reinigungsstufe 13 eine sich in deren Längsrichtung erstreckende Wand 23 auf, die mit Durchbrechungen 24 versehen ist. Diese Wand 23 trennt einen Bereich, in dem Filter 25, 26, 27, 28 angeordnet sind, von einem Bereich in dem ein Sandbett 23, 30 angeordnet ist.

Wie aus der Fig. 4 zu ersehen ist, sind die Filter 25, 26, 27, 28 an ihrer Unterseite mit einem Kunststoffvlies 31, 32 verbunden, wobei die untere Vliesschicht 31 des obersten Filters 25 erheblich dicker als die Vliesschichten 32 der übrigen drei Filter 26, 27, 28 ist und ca. 9mm beträgt, wogegen die Vliesschichten 32 eine Dicke von ca. 1mm aufweisen.

Die Filter 25, 26, 27, 28 liegen auf Gitterroste 33 auf, die an Winkeln 33 gehalten sind die an der Innenseite der biologischen Reinigungsstufe 13 und der Wand 23 befestigt sind.

Der oberste Filter 25 ist an seiner Oberseite mit einer weiteren Vliesschicht 34 aus Kunststoffasern verbunden. Außerdem ist im Bereich unmittelbar unter der Mündung des Ablaufrohres 6 eine aus Beton hergestellte Prallplatte 35 vorgesehen.

Unterhalb der vier Filter 25, 26, 27, 28 ist eine Betonschicht 36 vorgesehen, deren Oberfläche geneigt verläuft, wobei im Bereich des tiefsten Punktes dieser Betonschicht 36 ein die Wand 23 durchsetzendes Überlaufrohr 37 angeordnet ist. Dadurch kann das geklärte Wasser zum Sandbett 29, 30 gelangen das im Bereich der Mündung des Überlaufrohres 37 mit einer Prallplatte 38 geschützt ist.

Die Klärung des Abwassers in der biologischen Reinigungsstufe 13 erfolgt unter aeroben Bedingungen, wobei die erforderliche Luft einerseits durch die in den aus Gesteins- oder Glaswolle hergestellten Filtern 25, 26, 27, 28 gespeicherte Luft und andererseits durch Belüftung der Zwischenräume 39 zwischen den Filtern über die Durchbrechungen 24 der Wand 23 bereitgestellt wird.

Außerdem ergibt sich durch den Aufprall des Wassers auf die Prallplatte 35 eine sehr erhebliche Aufnahme von Luft durch das Wasser, sodaß für einen aeroben Aubbauprozeß ausreichend Luft zur Verfügung steht.

Die Filter 25, 26, 27, 28 setzen sich beginnend von dem die Prallplatte 35 umgebenden Bereich gegen die Ränder der Filter zu, wodurch die Höhe der Filter 25, 26, 27, 28 abnimmt und sich die in den Filtern vorhandene Luft mit dem zu klärenden Wasser vermengt.

Wie aus der Fig. 3 zu ersehen ist, ist eine Aufwickeleinrichtung 40 vorgesehen, die aus Gründen einer besseren Übersichtlichkeit ausschließlich in der Fig. 3 dargestllt ist. Diese besteht im wesentlichen aus vier herausnehmbar gehaltenen Haspeln 41, auf denen die verbrauchten Filter 25, 26, 27, 28 aufgewickelt werden können. Das beim Aufwickeln der Filter ausgepreßte Wasser fließt in den jeweils darunter befindliche Filter, bzw. auf die Betonschicht 36 und in das Sandbett 29, 30.

Beim Austauschen der Filter 25, 26, 27, 28 können die verbrauchten Filter einfach aufgewickelt und samt den Haspeln ausgebaut werden. Nach dem Einsetzen neuer mit frischen Filtern bewickelten Haspeln 41 können die Filter von diesen abgezogen und auf den Rosten 33 ausgebreitet werden.

Das aus dem Sandbett 29, 30 austretende Wasser tritt in ein Aktivkohlefilter 42 ein, das der Einmündung der Abzugsleitung 15 vorgeschaltet ist.

Damit ist sichergestellt, daß das Abwasser in einem sehr hohen Ausmaß geklärt in den Sickerschacht 17 gelangen kann, über den es an die Umwelt abgegeben wird.

## Patentansprüche

1. Abwasser-Kläranlage, insbesondere für dezentral gelegene Kleinstsiedlungen, mit einer Vorklär- bzw. Absetzeinrichtung (1), der eine biologische Reinigungsstufe (13j und dieser ein Sickerschacht (17) nachgeordnet sind, wobei die biologische Reinigungsstufe (13) in ihrem oberen Bereich ein von der Vorklär- bzw. Absetzeinrichtung (1) kommendes Zulaufrohr (6) aufweist, unter dem mehrere untereinander angeordnete auf wasserdurchlässigen Abstützungen aufliegenden Filter (25, 26, 27, 28) angeordnet sind, wobei die Zwischenräumne zwischen den Filtern belüftet sind, **dadurch gekennzeichnet**, daß die aus Faservlies hergestellten Filter (25, 26, 27, 28) aus Stein- oder Glaswolle hergestellt sind und daß eine Aufwickeleinrichtung (40) für jedes Filter (25, 26, 27, 28) vorgesehen ist.

2. Kläranlage nach Anspruch 1, **dadurch gekennzeichnet**, daß die Aufwickeleinrichtung (40) eine Haspel (41) aufweist, die einer vom Boden eines Schachtes aufragenden und sich über einen Teil seiner Höhe erstreckende Trennwand (23) und einer dieser gegenüberliegenden die Abstützungen der Filter (25, 26, 27, 28) haltenden Schachtwand angeordneten Halterungen einsetzbar sind.

3. Käranlage nach Anspruch 1 oder 2, **dadurch gekennzeichnet**, daß unter den Filtern (25, 26, 27, 28) eine ein Gefälle aufweisende Betonschicht (36) vorgesehen ist, von deren tiefster Stelle eine die Trennwand (23) des Schachtes durchsetzende Überlaufleitung (37) zum im selben Schacht angeordneten Sandbett (29, 30) führt, das im unter der Mündung der Überlaufleitung (37) liegenden Bereich mit einer Prallplatte (38), die vorzugsweise aus Beton hergestellt ist, abgedeckt ist.

4. Kläranlage nach einem der Ansprüche 1 bis 3, **dadurch gekennzeichnet**, daß die Filter (25, 26, 27, 28) an ihrer Unterseite mit einem Vlies (31, 32) aus Kunstfasern verbunden sind, wobei der oberste Filter (25) auch an seiner Oberseite mit einem Vlies (34) aus Kunstfasern verbunden ist und die Vliesschichten (31, 34) des obersten Filters (25) vorzugsweise dicker, als die der übrigen Filter (26, 27, 28) sind.

5. Kläranlage nach einem der Ansprüche 1 bis 4, **dadurch gekennzeichnet,** daß das Sandbett aus einer ca. 10cm dicken Schicht (30) aus Kies mit einer Korngröße von 4 bis 8mm und einer über dieser liegenden, ca. 20cm starken Schicht (29) aus gewaschenem Sand mit einer Korngröße von 0 bis 4mm gebildet ist.

6. Kläranlage nach einem der Ansprüche 1 bis 5, **dadurch gekennzeichnet**, daß dem Sandbett (29, 30) ein Aktivkohlefilter (42) nachgeordnet ist, der einem zum Sickerschacht (17) führenden Ablauf (15) vorgeschaltet ist.

## Claims

1. A plant for sewage purification, in particular for decentrally situated very small settlements, with a preliminary sedimentation or sedimentation device (1) which is provided downstream with a biological treatment stage (13) and downstream thereof with an absorbing well (17), with the biological treatment stage (13) having in its upper zone a feed pipe (6) coming from the preliminary sedimentation or sedimentation device (1), under which pipe are arranged several filters (25, 26, 27, 28) situated beneath one another and resting on water-permeable supports, with the intermediate spaces between the filters being ventilated, characterized in that the filters (25, 26, 27, 28) manufactured from fibre fleece are made of rock or glass wool and that a winding device (40) is provided for each filter (25, 26, 27, 28).

2. A plant for sewage purification as claimed in claim 1, characterized in that the winding device (40) comprises a reel (41) which are insertable in holding means arranged in a separating wall (23), which projects upwardly from the floor of a well and extends over a part of its height, and in a wall of the well which is opposite thereto and holds the supports of the filters (25, 26, 27, 28).

3. A plant for sewage purification as claimed in claim 1 or 2, characterized in that a concrete layer (36) is provided below the filters (25, 26, 27, 28) which comprises a descending slope, from the lowest position of which there leads an overflow line (37), which penetrates the separating wall (23) of the well, to the sand bed (29, 30) which is arranged in the same well and is covered in the zone below the opening of the overflow line (37) with a deflector (38) which is preferably made of concrete.

4. A plant for sewage purification as claimed in one of the claims 1 to 3, characterized in that the filters (25, 26, 27, 28) are connected on their lower sides with a fleece (31, 32) made of synthetic fibres, with the uppermost filter (25) being connected also on its upper side with a fleece (34) made of synthetic fibres and the layers of fleece (31, 34) of the uppermost filter (25) preferably being thicker than those of the remaining filters (26, 27, 28).

5. A plant for sewage purification as claimed in one of the claims 1 to 4, characterized in that the sand bed is formed by a layer (30) of pebbles of approx. 10 cm thickness and with a grain size of 4 to 8 mm and by a layer (29) of approx. 20 cm thickness which is disposed above the former layer and is made of washed sand with a grain size of 0 to 4 mm.

6. A plant for sewage purification as claimed in one of the claims 1 to 5, characterized in that the sand bed (29, 30) is provided downstream with an activated carbon filter (42) which is provided upstream with a discharge (15) leading to the absorbing well (17).

## Revendications

1. Installation d'épuration des eaux-vannes, en particulier pour des petits lotissements décentralisés, comprenant un décanteur primaire ou séparateur (1), une fosse d'épuration biologique (13) montée en aval de celui-ci et un puisard (17) en aval de ce dernier, la fosse d'épuration biologique (13) étant munie dans sa partie supérieure d'un tube d'admission (6) provenant du décanteur primaire ou séparateur (1), en dessous duquel tube sont montés plusieurs filtres (25, 26, 27, 28), posés sur des supports perméables disposés les uns au-dessous des autres, les espaces entre les filtres étant aérés, caractérisée en ce que les filtres (25, 26, 27, 28), réalisés dans du non-tissé, sont fabriqués en laine de roche ou laine de verre et en ce qu'un dispositif d'enroulement (40) est prévu pour chaque filtre (25, 26, 27, 28).

2. Installation d'épuration des eaux-vannes selon la revendication 1, caractérisée en ce que le dispositif d'enroulement (40) comprend une bobineuse (41), qui peut être posée sur des supports montés entre une cloison (23) qui s'étend du fond d'un puits sur une partie de la hauteur de celui-ci et une paroi du puits opposée à cette dernière et portant les supports des filtres (25, 26, 27, 28).

3. Installation d'épuration des eaux-vannes selon la revendication 1 ou 2, caractérisée en ce que, en dessous des filtres (25, 26, 27, 28), il est prévu de réaliser un radier en béton (36) incliné, à partir du point le plus bas duquel s'étend une conduite de déversement (37), traversant la cloison (23) du puits, jusque dans le lit de sable (29, 30) disposé dans le même puits, lequel lit de sable est recouvert par une plaque de percussion (38), réalisée de préférence en béton, qui est posée dans la zone en dessous de laquelle débouche la conduite de déversement (37).

4. Installation d'épuration des eaux-vannes selon l'une quelconque des revendications 1 à 3, caractérisée en ce que les filtres (25, 26, 27, 28) sont revêtus sur leur face inférieure d'un non-tissé (31, 32) en fibres synthétiques, le filtre supérieur (25) étant également revêtu sur sa face supérieure d'un non-tissé (34) en fibres synthétiques et les couches de non-tissé (31, 34) du filtre supérieur (25) étant de préférence plus épaisses que celles des autres filtres (26, 27, 28).

5. Installation d'épuration des eaux-vannes selon l'une quelconque des revendications 1 à 4, caractérisée en ce que le lit de sable est formé par une couche (30) de gravier, présentant une épaisseur de 10 cm environ et des grains dont la grosseur est comprise entre 4 et 8 mm, et par une couche (29) de sable lavé, présentant une épaisseur de 20 cm environ et des grains dont la grosseur est comprise entre 0 et 4 mm.

6. Installation d'épuration des eaux-vannes selon l'une quelconque des revendications 1 à 5, caractérisée en ce qu'un filtre à charbon actif (42) est monté en aval du lit de sable (29, 30) et en amont d'une conduite de décharge (15) qui communique avec le puisard (17).
